# EUROPEAN PATENT APPLICATION

(11) **EP 1 359 119 A1**
(43) Date of publication of application: **05.11.2003**
(21) Application number: 03003929.1
(22) Date of filing: 21.02.2003
(51) Int. Cl.: C01B 3/38, H01M 8/06

(54) **Fuel reformer**

(30) Priority: 09.04.2002 JP 2002106642
(71) Applicant: Nissan Motor Co., Ltd., Yokohama-shi, Kanagawa (JP)
(72) Inventor: Tanaka, Shiro, Yokosuka-shi, Kanagawa (JP); Shinohara, Mikiya, Kanazawa-ku, Yokohama-shi, Kanagawa (JP); Sakakida, Akihiro, Yokosuka-shi, Kanagawa (JP); Shoji, Tadashi, Yokosuka-shi, Kanagawa (JP)
(74) Representative: Weber, Joachim, Dr.

(57) **Abstract**

A reformer (5) which generates hydrogen-rich reformate gas by causing a catalytic reaction of fuel and air comprises a premixing chamber (12) for premixing the fuel with the air. High temperature air is supplied to the premixing chamber (12) from an air intake tube (13) via an orifice (14). A fuel injector (16) injects the fuel into the flow of the high temperature air in the premixing chamber (12) to generate fuel-air mixture. A homogenizing filter (17) homogenizes the composition of the fuel-air mixture in the premixing chamber (12) and supplies a uniform fuel-air mixture to a reforming catalyst (11).

## Description

### FIELD OF THE INVENTION

This invention relates to a reformer for producing hydrogen-rich reformate gas from hydrocarbon fuel.

### BACKGROUND OF THE INVENTION

JP2001-180904 published by the Japanese Patent Office in 2001 discloses a reformer which produces reformate gas containing a large amount of hydrogen by causing a reaction of fuel mixture in the presence of a catalyst. The fuel mixture comprises hydrocarbon fuel such as gasoline or methanol and air as an oxidation agent.

The reformer is specifically used for producing hydrogen which is supplied to an anode of a fuel cell stack. In the reformer, the fuel is injected into a premixing chamber by an injector, mixed with air in the premixing chamber, and lead to the catalyst as a fuel mixture.

### SUMMARY OF THE INVENTION

If the fuel and air are not mixed uniformly, the reforming reaction will also not be performed uniformly when the catalyst invokes the reaction of the fuel mixture. If the reforming reaction is non-uniform, the composition of the reformate gas as a result of the reforming reaction will not be uniform.

In order to ensure the uniformity of the fuel mixture, it may be necessary to increase a distance between the injector and the catalyst or provide a supplemental premixing chamber. However, these arrangements make the reformer larger in size with a larger heat capacity and increase the complexity of the construction.

It is therefore an object of this invention to ensure uniform mixing of fuel and air in the reformer while preventing the above inconveniences.

In order to achieve the above object, this invention provides a fuel reformer which generates hydrogen-rich reformate gas by causing a reaction of hydrocarbon fuel in the presence of a catalyst, comprising a premixing chamber for mixing the fuel with high temperature air, an air intake tube which supplies the high temperature air to the premixing chamber, an orifice disposed between the air intake tube and the premixing chamber, the orifice having a smaller cross-sectional area than a cross-sectional area of the air intake tube, a fuel injector which injects the fuel into the high temperature air, and a homogenizing filter which homogenizes the flow of a fuel-air mixture generated into the premixing chamber and leads the fuel-air mixture to the catalyst.

The details as well as other features and advantages of this invention are set forth in the remainder of the specification and are shown in the accompanying drawings.

### BRIEF DESCRIPTION OF THE DRAWINGS

FIG. 1 is a schematic diagram of a fuel cell power plant provided with a reformer according to this invention.

FIG. 2 is a longitudinal cross-sectional view of the reformer.

FIG. 3 is a longitudinal cross-sectional view of essential parts of the reformer describing a variation in the thickness of a homogenizing filter according to this invention.

FIG. 4 is a diagram describing a characteristic of fuel concentration of a fuel-air mixture in a premixing chamber with respect to a distance from a center axis thereof.

FIG. 5 is a longitudinal cross-sectional view of a reformer according to a second embodiment of this invention.

FIG. 6 is a longitudinal cross-sectional view of a reformer according to a third embodiment of this invention.

FIG. 7 is a longitudinal cross-sectional view of a reformer according to a fourth embodiment of this invention.

FIG. 8 is a cross-sectional view of an air intake tube according to the fourth embodiment of this invention, taken along a line VIII-VIII in FIG. 7.

FIG. 9 is a longitudinal cross-sectional view of essential parts of the reformer according to the second - fourth embodiments of this invention, describing a variation in the thickness of the homogenizing filter.

### DESCRIPTION OF THE PREFERRED EMBODIMENTS

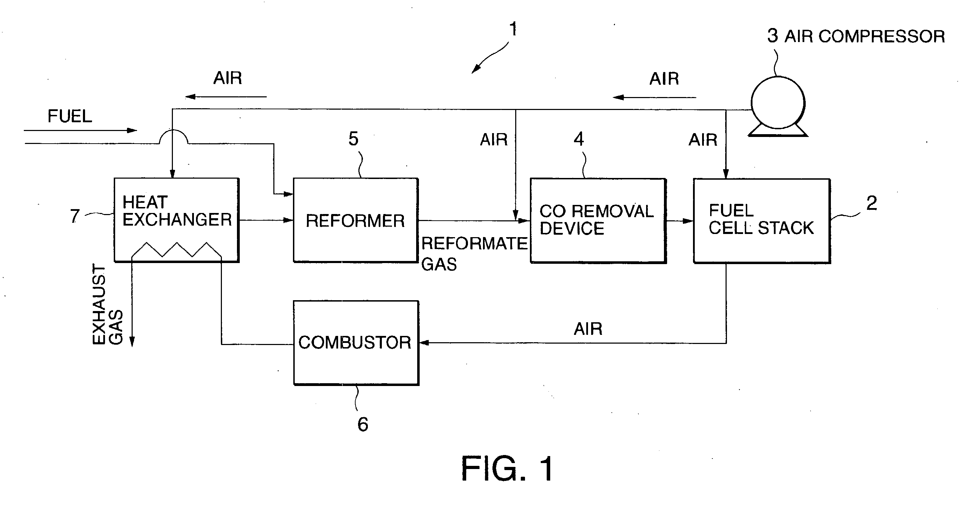

Referring to FIG. 1 of the drawings, a fuel cell power plant 1 for a vehicle comprises a fuel cell stack 2, a reformer 5, a carbon monoxide (CO) removal device 4, an air compressor 3, a combustor 6 and a heat exchanger 7.

The fuel cell stack 2 is a stacked body of fuel cells which generate electric power by the electrochemical reaction of hydrogen (H₂) provided from the reformer 5 via the CO removal device 4 and oxygen (O₂) provided in the form of air from the air compressor 3 under the presence of a catalyst.

Gasoline as a hydrocarbon fuel and air from the air compressor after being heated by the heat exchanger 7 are supplied to the reformer 5.

The reformer 5 causes a reaction of fuel-air mixture in the presence of a catalyst to produce reformate gas which mainly contains hydrogen. The reformate gas then flows into the CO removal device 4 together with air supplied from the air compressor 3.

In the CO removal device 4, preferential oxidation of carbon monoxide contained in the reformate gas takes place in the presence of a catalyst. Due to this reaction, the CO concentration of the reformate gas is reduced. The reformate gas after its CO concentration has been sufficiently reduced is then supplied to an anode of the fuel cell stack 2.

Hydrogen in the reformate gas supplied to the anode of the fuel cell stack 2 is used for electric power generation by the fuel cell stack 2. The residual gas at the anode is discharged as anode effluent. Since the anode effluent still contains a considerable amount of hydrogen, it is supplied to the combustor 6 and burned in the combustor 6. The combustion gas is supplied to the heat exchanger 7 for heating air which is supplied from the air compressor 3 to the reformer 5 as described above.

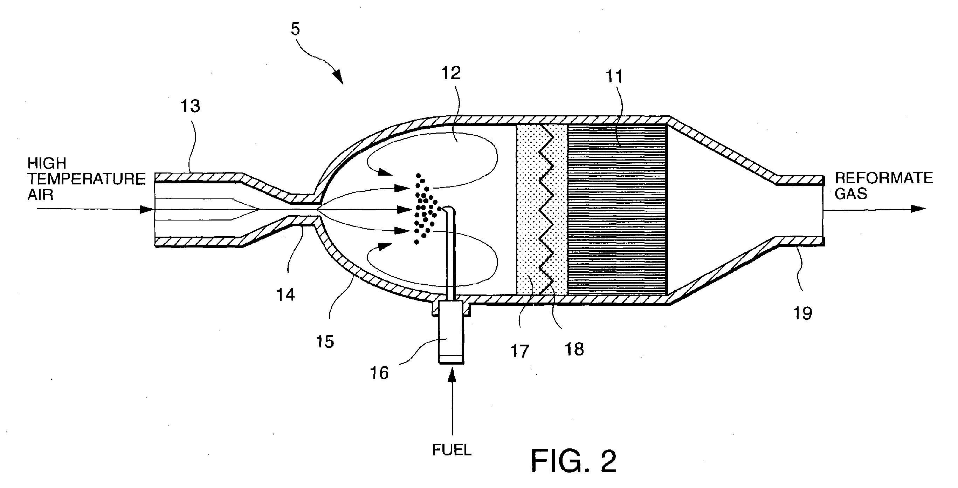

Next, referring to FIG. 2, the reformer 5 comprises a premixing chamber 12 formed in a cylindrical housing 15, a homogenizing filter 17, a heater 18 and a reforming catalyst 11.

High temperature air is introduced into the premixing chamber 12 from the heat exchanger 7 via an air intake tube 13 formed at an end of the housing 15. An orifice 14 for accelerating the air flow inflowing into the premixing chamber 12 is formed in the intake tube 13.

The reformer 5 further comprises a fuel injector 16. Gasoline is supplied to the fuel injector 16 as fuel at a constant pressure and the fuel injector 16 injects fuel against the air flow in the premixing chamber 12 to generate a mixture of fuel and air. The injection point of the fuel injector 16 is set to be located on the extension of the center axis of the orifice 14. The fuel injection direction of the fuel injector 16 is set such that fuel is injected in the reverse direction of the air flow from the orifice 14 to the premixing chamber 12. A fuel injector having a wide injection angle is applied for the fuel injector 16. A sufficient distance is set between the fuel injection point of the fuel injector 16 and the orifice 14 to prevent the injected fuel from being adhered to the wall of the premixing chamber 12.

The homogenizing filter 17 is disposed at a downstream side of the premixing chamber 12 with respect to the flow of fuel-air mixture in the housing 15. The homogenizing filter 17 is made of a heap of thin metal fibers or porous ceramic and provided with numerous cells connected to each other.

The heater 18 is an electrically activated heater and disposed in the homogenizing filter 17.

In the reforming catalyst 11, a number of passages are delimited by walls coated with a precious metal catalyst. The fuel-air mixture flowing through these passages is inevitably in contact with the catalyst, thereby performing a chemical reaction.

The cross-sectional area of the homogenizing filter 17 is set equal to that of the reforming catalyst 11. Having the cross-sectional area equal to that of the reforming catalyst 11 causes the fuel-air mixture inflowing into the reforming catalyst 11 to disperse evenly, enhance the working efficiency of the reforming catalyst 11 and ensure the constant composition of the reformate gas which the reforming catalyst 11 generates.

The reformate gas thus generated by the reforming catalyst 11 is lead to the CO removal device 4 from an outlet 19 formed at another end of the housing 15.

In the reformer 5, high temperature air spouts out from the air intake tube 13 via the orifice 14 into the premixing chamber 12. The fuel injector 16 injects fuel towards the flow of this high temperature air. The injected fuel collides with the high temperature air, mixed with the air, and vaporized upon receiving heat from the high temperature air.

The flow of the fuel-air mixture thus generated then collides with the homogenizing filter 17 and circulates within the premixing chamber 12 from the centermost part towards outside as shown in FIG. 2. This circulation promotes the mixing of the fuel and air. Mixing of the fuel and air is further promoted by the homogenizing filter 17 when the fuel-mixture passes therethrough.

Since the catalytic reaction performed in the reforming catalyst 11 is an exothermic reaction, the homogenizing filter 17 is heated by the heat generated by the reforming catalyst 11. The high temperature of the homogenizing filter 17 helps to vaporize the fuel in the fuel-air mixture.

The mixture of the vaporized fuel and high temperature air thus created and uniformly mixed together is supplied to the reforming catalyst 11. Fuel concentration in the mixture is therefore sufficiently uniform, so the reaction in the reforming catalyst 11 is also performed uniformly at a constant reaction temperature, and the resultant reformate gas maintains a constant preferable composition.

According to this reformer 5, the fuel concentration of the mixture is homogenized without setting a large distance between the injection point of fuel and the reforming catalyst 11, which can make the reformer 5 compact in size.

The heater 18 is activated according to the reforming condition. For example, it is activated when the fuel cell power plant starts operation, or when large amount of fuel is supplied to the reformer 5 according to a large power generation load, so as to vaporize the fuel which is not vaporized by the heat of the high temperature air.

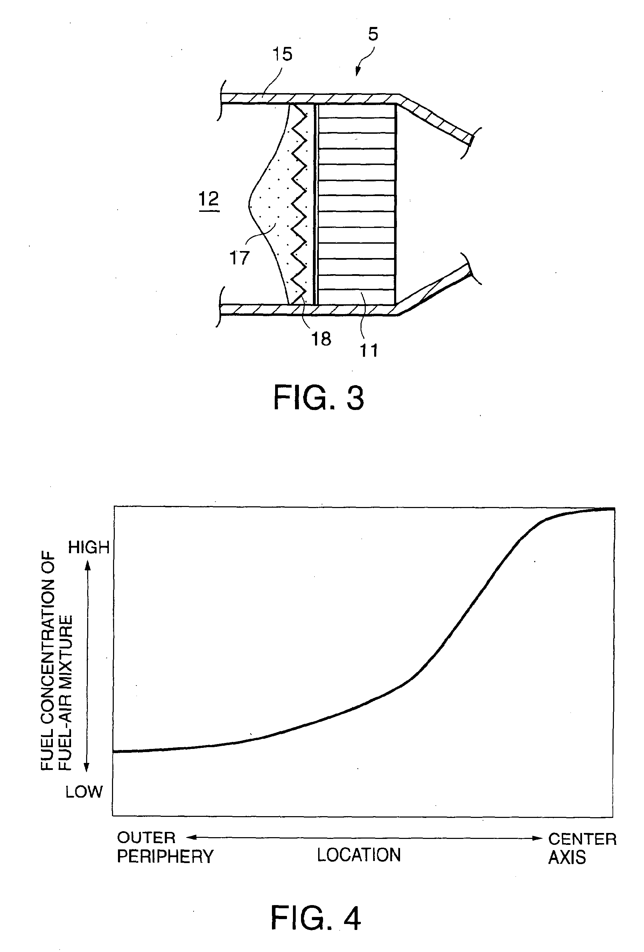

Referring now to FIG. 4, the circulation of the fuel-air mixture formed in the premixing chamber 12 has a tendency to vary the fuel concentration of the mixture at an inlet of the homogenizing filter 17 such that it becomes high as it approaches towards the center of the cross-section of the premixing chamber 12.

Therefore, it is preferable that the specifications of the homogenizing filter 17 are determined to compensate for the increase in the fuel concentration in the centermost part of the inlet of the homogenizing filter 17.

Specifically, if the thickness of the homogenizing filter 17 is constant, it is preferable to set the fineness of the homogenizing filter 17 to be different according to a distance from the center of the homogenizing filter 17 towards its outer periphery. In the centermost part of the filter 17, the fineness should be high and it should become lower as the distance from the center of the filter 17 increases.

If the fineness of the homogenizing filter 17 is constant, the thickness of the homogenizing filter 17 should be changed, i.e., it should decrease as the distance from the center of the homogenizing filter 17 increases as shown in FIG. 3.

By the above arrangement with respect to the specification of the homogenizing filter 17, inlet resistance of the fuel-air mixture into the homogenizing filter 17 is larger at the centermost part and smaller at an outer peripheral part. This difference in the inlet resistance compensates for the difference in the fuel concentration of the fuel-air mixture and evens out the fuel concentration of the fuel-air mixture when it is lead into the reforming catalyst 11.

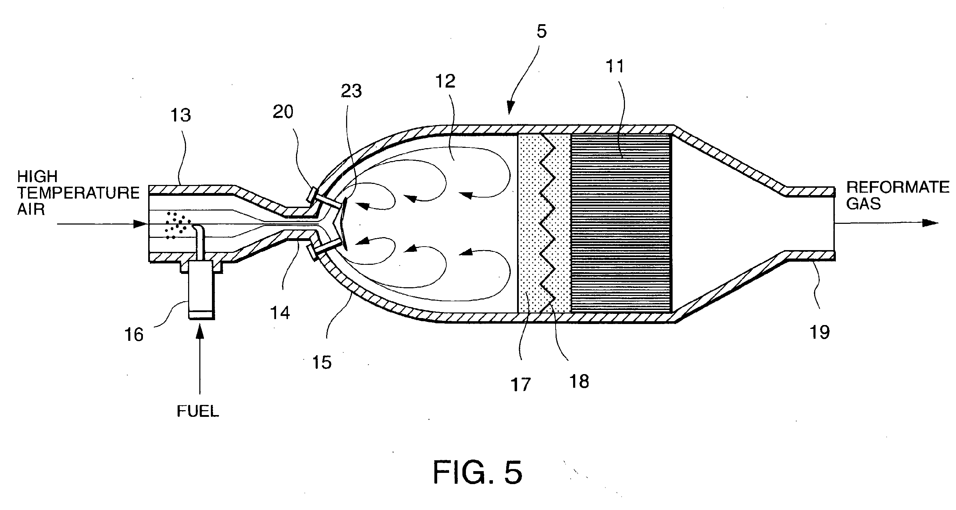

Next, referring to FIG. 5, a second embodiment of this invention with respect to the construction of the reformer 5 will be described.

According to this embodiment, the fuel injector 16 is disposed in the air intake tube 13, not in the premixing chamber as in the first embodiment.

The fuel injector 16 is arranged to inject fuel in the reverse direction to the flow of the high temperature air in the air intake tube 13. In the downstream of the orifice 14, an interrupting plate 23 is supported by supports 20 which are fixed to the housing 15. The interrupting plate 23 is in the shape of cone the top end of which is directed against the orifice 14.

The fuel injected from the fuel injector 16 is mixed with the high temperature air flowing through the air intake tube 13 and forms a fuel-air mixture. The flow of this fuel-air mixture is then accelerated by the orifice 14 and mixing of the fuel and air is further promoted. Since the fuel injector 16 is disposed in the air intake tube 13 in this embodiment, the distance between the fuel injection point and the reforming catalyst 11 can be set larger than that of the first embodiment. Accordingly, the period from the fuel injection until the catalytic reaction of the injected fuel can be increased. The mixing of the fuel and air can be fully performed during this time period.

The interrupting plate 23 interrupts the flow of the fuel-air mixture spouted out from the orifice 14 into the premixing chamber 12, thereby dispersing the fuel-air mixture in the premixing chamber 12. A number of eddies are formed at a downstream side of the interrupting plate 23 and these eddies further promote the mixing of the fuel and air.

According to this embodiment, therefore, the concentration of the fuel in the fuel-air mixture at the inlet of the reforming catalyst 11 can further be homogenized.

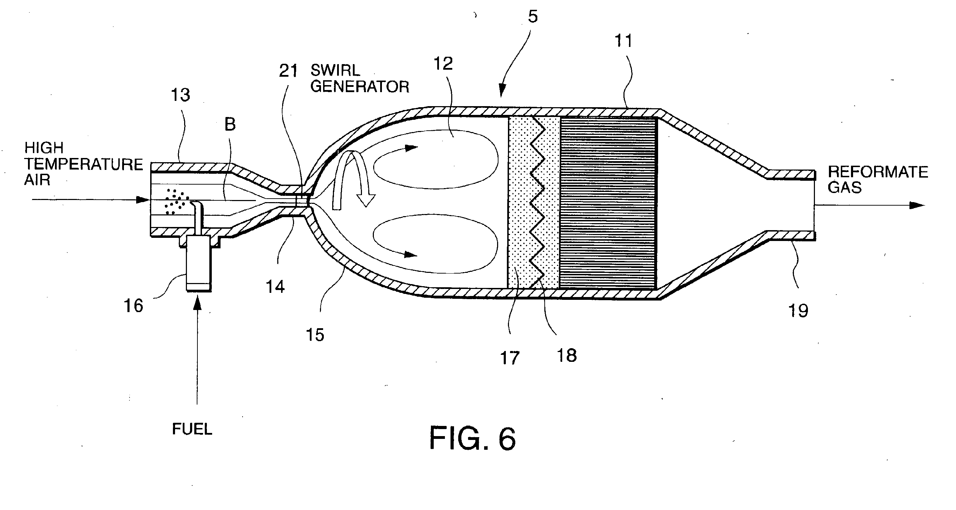

Next, referring to FIG. 6, a third embodiment of this invention with respect to the construction of the reformer 5 will be described.

According to this embodiment, a swirl generator 21 is provided in the orifice 14 instead of the interrupting plate 23 of the second embodiment. The swirl generator 21 exerts a revolving force onto the flow of the fuel-air mixture which passes through the orifice 14 so as to form a swirl of the fuel-air mixture around the center axis of the housing 15 in the premixing chamber 12. This swirl in association with the inlet resistance of the homogenizing filter 17 causes a circulation of the mixture in the premixing chamber 12 in the direction from the outer periphery of the premixing chamber towards the centermost part thereof at the inlet of the homogenizing filter 17 as illustrated in the figure. This circulation further promotes mixing of the fuel and air in the premixing chamber 12.

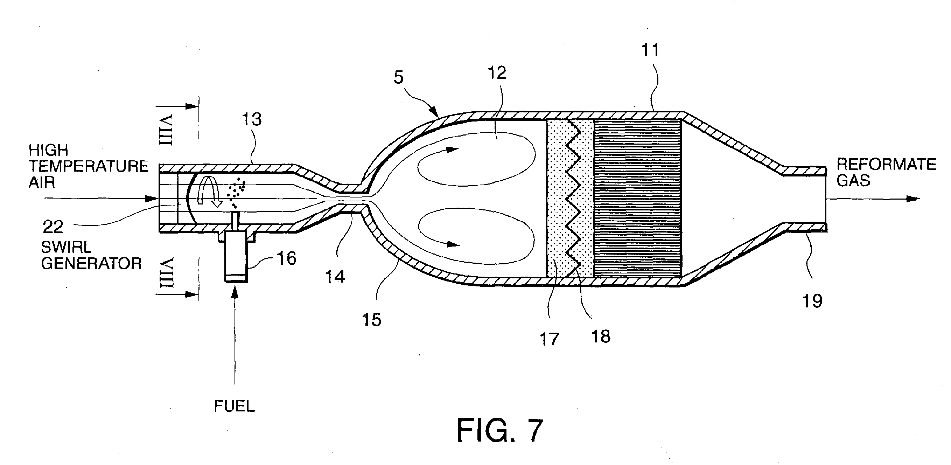

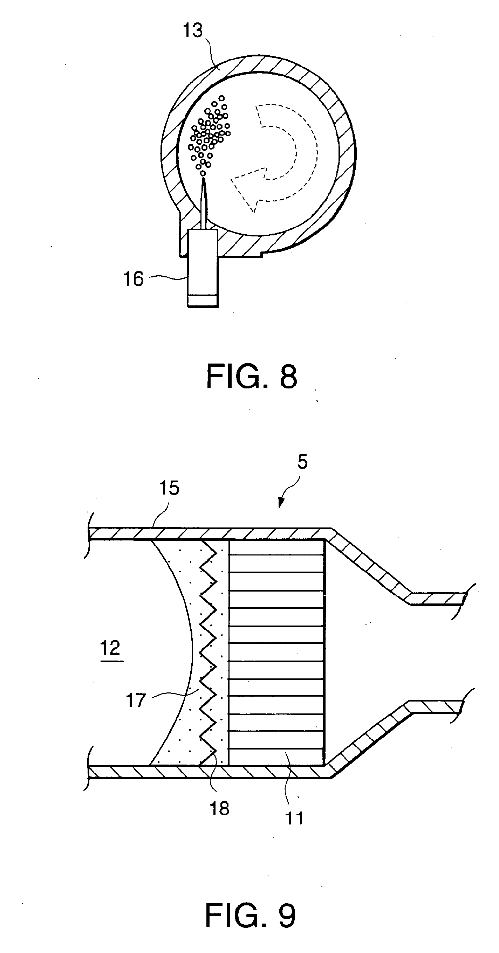

Next, referring to FIGs. 7 and 8, a fourth embodiment of this invention with respect to the construction of the reformer 5 will be described.

Referring to FIG. 7, according to this embodiment, a swirl generator 22 is installed in the air intake tube 13 upstream of the fuel injector 16 instead of the swirl generator 21 of the third embodiment.

Referring to FIG. 8, the fuel injector 16 is arranged to inject fuel along a tangent line of the circular cross-section of the air intake tube 13 such that the injected fuel joins the swirl of the high temperature air towards the orifice 14. When the resultant fuel-air mixture ejected from the orifice 14 into the premixing chamber 12, it disperses along the cylindrical wall of the premixing chamber 12 due to the centrifugal force of the swirl. This dispersal of the fuel-air mixture in association with the inlet resistance of the homogenizing filter 17 causes a circulation of the fuel-air mixture similar to that generated by the third embodiment. According to this embodiment also, mixing of the fuel and air in the premixing chamber 12 is enhanced.

In the second - fourth embodiments in which the fuel injector 16 is disposed in the air intake tube 13, circulation of the fuel-air mixture promoted by the interrupting plate 23 or swirl generators 21, 22 takes place in the premixing chamber 12. This circulation of the fuel-air mixture has a tendency to vary the fuel concentration of the fuel-air mixture at the inlet of the homogenizing filter 17. In these embodiments, unlike the case of the first embodiment, the fuel concentration is higher at an outer periphery of the premixing chamber 12 with respect to the centermost part thereof.

Accordingly, in these embodiments, it is preferable to vary the specification of the homogenizing filter 17 such that it can cancel out the variation in the fuel concentration of the fuel-air mixture at the inlet of the homogenizing filter 17.

Specifically, if the thickness of the homogenizing filter 17 is constant, the fineness of the homogenizing filter 17 should increase as the distance from the center axis towards the outer periphery increases. If the fineness of the homogenizing filter 17 is constant at any part, the thickness of the homogenizing filter 17 should increase as the distance from the center axis in the radial direction increases as shown in FIG. 9.

In any of the above cases, the inlet resistance to the homogenizing filter 17 is larger at the outer peripheral part of the premixing chamber 12 and smaller at the centermost part thereof. This difference in the inlet resistance compensates for the difference in the fuel concentration of the fuel-air mixture and evens out the fuel concentration of the fuel-air mixture introduced into the reforming catalyst 11.

The contents of Tokugan 2002-106642, with a filing date of April 9, 2002 in Japan, are hereby incorporated by reference.

Although the invention has been described above by reference to certain embodiments of the invention, the invention is not limited to the embodiments described above. Modifications and variations of the embodiments described above will occur to those skilled in the art, in light of the above teachings.

The embodiments of this invention in which an exclusive property or privilege is claimed are defined as follows:

## Claims

1. A fuel reformer (5) which generates hydrogen-rich reformate gas by causing a reaction of hydrocarbon fuel in the presence of a catalyst (11), comprising:
a premixing chamber (12) for mixing the fuel with high temperature air;
an air intake tube (13) which supplies the high temperature air to the premixing chamber (12);
an orifice (14) disposed between the air intake tube (13) and the premixing chamber (12), the orifice (14) having a smaller cross-sectional area than a cross-sectional area of the air intake tube (13);
a fuel injector (16) which injects the fuel into the high temperature air; and
a homogenizing filter (17) which homogenizes the flow of a fuel-air mixture generated in the premixing chamber (12) and leads the fuel-air mixture to the catalyst (11).

2. The fuel reformer (5) as defined in Claim 1, wherein a cross-sectional area of the homogenizing filter (17) is set equal to a cross-sectional area of the catalyst (11).

3. The fuel reformer (5) as defined in Claim 1 or Claim 2, wherein the homogenizing filter (17) is made of any one of thin metal fibers and porous ceramic.

4. The fuel reformer (5) as defined in Claim 3, wherein the homogenizing filter (17) is formed to have a constant thickness in the direction of the flow of the fuel-air mixture, and a varying fineness according to a radial distance from a center axis of the homogenizing filter (17).

5. The fuel reformer (5) as defined in Claim 3, wherein the homogenizing filter (17) is formed to have a constant fineness and a varying thickness in the direction of the flow of the fuel-air mixture according to a radial distance from a center axis of the homogenizing filter (17).

6. The fuel reformer (5) as defined in any one of Claim 1 through Claim 5, wherein the homogenizing filter (17) comprises a heater (18) which heats the fuel-air mixture flowing through the homogenizing filter (17).

7. The fuel reformer (5) as defined in any one of Claim 1 through Claim 6, wherein the fuel injector (16) comprises a fuel injector (16) which injects the fuel against a flow of the high temperature air which is flowing from the orifice (14) into the premixing chamber (12).

8. The fuel reformer (5) as defined in any one of Claim 1 through Claim 6, wherein the fuel injector (16) comprises a fuel injector (16) which injects the fuel towards the high temperature air flowing through the air intake tube (13).

9. The fuel reformer (5) as defined in Claim 8, wherein the fuel reformer (5) further comprises an interrupting plate (23) which redirects a flow of the fuel-air mixture which is flowing from the orifice (14) into the premixing chamber (12), towards an outer periphery of the premixing chamber (12).

10. The fuel reformer (5) as defined in Claim 9, wherein the interrupting plate (23) is disposed coaxially with the orifice (14) and is formed in a shape of a cone of which a projecting end is directed to the orifice (14).

11. The fuel reformer (5) as defined in Claim 8, wherein the fuel reformer (5) further comprises a swirl generator (21) which exerts a revolving force on a flow of the fuel-air mixture in the orifice (14).

12. The fuel reformer (5) as defined in Claim 8, wherein the fuel reformer (5) further comprises a swirl generator (22) which is disposed in the air intake tube (13) and exerts a revolving force on a flow of the high temperature air in the air intake tube (13), the fuel injector (16) is disposed downstream of the swirl generator (22) in the air intake tube (13) and arranged to inject the fuel along a tangent line of a revolution of the high temperature air.
